# EUROPÄISCHE PATENTANMELDUNG

(11) **EP 4 276 051 A1**
(43) Veröffentlichungstag der Anmeldung: **15.11.2023**
(21) Anmeldenummer: 23170536.9
(22) Anmeldetag: 28.04.2023
(51) Int. Cl.: B67B 3/20, F16D 1/10, F16D 3/50

(54) **AUSGLEICHSGELENK**

(30) Priorität: 04.05.2022 DE 102022110965
(71) Anmelder: KRONES AG, 93073 Neutraubling (DE)
(72) Erfinder: BREY, Christian, 93073 Neutraubling (DE)
(74) Vertreter: v. Bezold & Partner Patentanwälte - PartG mbB

(57) **Zusammenfassung**

Die Erfindung betrifft ein Ausgleichsgelenk (16), das ein erstes Ende (18) eines ersten Bauteils (12) und ein zweites Ende (20) eines zweiten Bauteils (14) zum Ausgleichen eines Radialversatzes und/oder eines Winkelversatzes zwischen dem ersten Ende (18) und dem zweiten Ende (20) verbinden kann. Das Ausgleichsgelenk (16) weist ein Aufnahmeelement (22), ein Gleitelement (24), ein Sicherungselement (26) und ein Dichtelement (28) auf. Vorteilhaft weist das Ausgleichsgelenk (16) eine besonders hygienische Konstruktion auf.

## Beschreibung

### Technisches Gebiet

Die Erfindung betrifft ein Ausgleichsgelenk, eine Vorrichtung zum Versatzausgleich mit einem Ausgleichsgelenk und eine Behälterbehandlungsvorrichtung, vorzugsweise Verschließvorrichtung zum Verschließen von Behältern, aufweisend eine Vorrichtung zum Versatzausgleich mit einem Ausgleichsgelenk.

### Technischer Hintergrund

Ausgleichsgelenke zum Ausgleichen eines radialen Versatzes zweier Bauteile sind an sich bekannt. Es gibt Ausgleichsgelenke, welche Linearantriebe von angrenzenden Bauteilen axial entkoppeln können. Teilweise können Ausgleichsgelenke Schiefstellungen bzw. Winkelversatz (Winkelfehler) zwischen zwei Bauteilen ausgleichen.

In der Anlagentechnik für die Lebensmittel- und Getränkeindustrie können spezielle Anforderungen an die verwendeten Bauteile gestellt werden. Dies gilt insbesondere mit Blick auf eine hygienische Konstruktion und Gestaltung der Bauteile, da Verunreinigungen der Produkte unbedingt zu vermeiden sind. Eine hygienische Konstruktion kann bspw. durch eine leichte Reinigbarkeit mittels Schaumreinigung, Heißwasserabschwallung usw. begünstigt sein, die bspw. bei engen Spalten, wie Ringspalten, nicht oder nur ungenügend gegeben sein kann.

Der Erfindung liegt die Aufgabe zu Grunde, ein verbessertes Ausgleichsgelenk zu schaffen, insbesondere in Bezug auf Hygieneverbesserungen. Besonders bevorzugt soll das Ausgleichsgelenk in einer Behälterbehandlungsvorrichtung, z. B. einer Verschließvorrichtung zum Verschließen von Behältern, einsetzbar sein.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft ein Ausgleichsgelenk (z. B. für Linearbewegungen) zum Ausgleichen eines Radialversatzes und/oder eines Winkelversatzes zwischen einem ersten Ende eines ersten Bauteils und einem zweiten Ende eines zweiten Bauteils, vorzugsweise für eine Verschließvorrichtung zum Verschließen von Behältern. Das Ausgleichsgelenk weist ein Aufnahmeelement auf, in dem das erste Ende aufnehmbar ist und das an dem zweiten Ende befestigbar ist. Das Ausgleichsgelenk weist ferner ein Gleitelement auf, mit dem das erste Ende und das Aufnahmeelement gleitend miteinander verbindbar sind. Das Ausgleichsgelenk weist ferner ein Sicherungselement auf, das an dem ersten Ende befestigbar ist und mit dem das erste Ende axial an dem Aufnahmeelement sicherbar ist. Das Ausgleichsgelenk weist ferner ein (z. B. säure-, basen-, reinigungsschaum- und/oder heißwasserresistentes) Dichtelement (z. B. Dichtring) auf, das zum (z. B. aseptischen) Abdichten zwischen dem Aufnahmeelement und dem ersten Ende anordenbar ist, vorzugsweise aufgenommen in oder an einem bevorzugt (z. B. im Einbauzustand) von außen zugängigen (z. B. ringförmigen) Absatz des Aufnahmeelements (z. B. in einem Mündungsbereich einer des Aufnahmeelements).

Vorteilhaft weist das Ausgleichsgelenk damit eine besonders hygienische Konstruktion auf. Das Ausgleichsgelenk kann damit besonders geeignet zur Verwendung in einer Behälterbehandlungsvorrichtung, zum Beispiel einer Verschließvorrichtung zum Verschließen von Behältern, geeignet sein. Vorzugsweise kann das Ausgleichsgelenks die Querkräfte auf das erste Bauteil, das bspw. einem Antrieb für lineare Bewegungen zugeordnet ist, erheblich verringern. Das Ausgleichsgelenk kann auf einfache Weise von außen reinigbar sein, ohne das Reinigungsmittel zwischen dem Aufnahmeelement und dem ersten Bauteil in das Aufnahmeelement eindringt. Die Konstruktion ermöglicht zudem, auf enge Spalten oder Ringspalten, welche nicht definiert gereinigt werden, zu verzichten, insbesondere durch das Vermeiden von engen Spalten durch den von außen zugängigen Absatz zum Aufnehmen des Dichtelements.

Bevorzugt können zumindest alle Außenteile des Ausgleichgelenks oder alle Teile des Ausgleichgelenks reinigungsmittelresistent, säureresistent, basenresistent, reinigungsschaumresistent und/oder heißwasserresistent ausgeführt sein.

In einem Ausführungsbeispiel ist das Gleitelement sowohl mit dem ersten Ende als auch mit dem Aufnahmeelement in Gleitkontakt bringbar. Vorteilhaft kann damit ermöglicht werden, dass das Gleitelement sowohl einen Radialversatz als auch einen Winkelversatz ausgleichen kann.

In einem weiteren Ausführungsbeispiel ist das Gleitelement als eine Gleitscheibe ausgeführt. Vorteilhaft kann damit eine konstruktiv einfache Ausführung des Gleitelements ermöglicht werden.

In einem weiteren Ausführungsbeispiel weist das Gleitelement eine erste vorzugsweise plane Fläche auf, die in Gleitkontakt mit einem von dem ersten Ende und dem Aufnahmeelement bringbar ist. Alternativ oder zusätzlich weist das Gleitelement eine zweite, vorzugsweise konkav (oder konvex), gewölbte Fläche auf, die beispielsweise entgegengesetzt zu der ersten planen Fläche ausgerichtet ist und die in Gleitkontakt mit dem anderen von dem ersten Ende und dem Aufnahmeelement bringbar ist. Vorteilhaft kann die plane Gleitfläche einen Radialversatzausgleich zwischen dem ersten Ende und dem Aufnahmeelement und damit dem zweiten Ende ermöglichen. Vorteilhaft kann die gewölbte Gleitfläche einen Winkelversatzausgleich zwischen dem ersten Ende dem Aufnahmeelement und damit dem zweiten Ende ermöglichen.

In einer Ausführungsform ist das Gleitelement in Gleitkontakt mit einer planen Stirnfläche des ersten Endes bringbar (zum Beispiel mit der ersten Fläche des Gleitelements). Vorteilhaft kann damit ein Radialversatzausgleich ermöglicht werden. Alternativ oder zusätzlich weist das Aufnahmeelement eine, vorzugsweise konvex (oder konkav), gewölbte Fläche, vorzugsweise Bodenfläche, in Gleitkontakt mit dem Gleitelement (z. B. mit der zweiten Fläche des Gleitelements) auf. Vorteilhaft kann damit ein Winkelversatzausgleich ermöglicht werden.

In einer weiteren Ausführungsform weist das Aufnahmeelement ein (z. B. zentrales) Durchgangsloch, vorzugsweise an einem Bodenwandabschnitt des Aufnahmeelements, auf. Das Gleitelement weist ein (z. B. zentrales) Durchgangsloch auf. Das Sicherungselement erstreckt sich durch das Durchgangsloch des Gleitelements und das Durchgangsloch des Aufnahmeelements, vorzugsweise mit Spiel (zum Beispiel zum Ermöglichen des Radialversatzes und/oder des Winkelversatzes). Vorteilhaft kann damit eine innere Anordnung des Sicherungselements ermöglicht werden, wodurch die hygienische Konstruktion des Ausgleichsgelenks weiter unterstützt wird.

In einer weiteren Ausführungsform ist das Sicherungselement als eine Sicherungsschraube ausgeführt ist. Vorteilhaft kann damit eine konstruktiv einfache Ausführung des Sicherungselements ermöglicht werden.

In einer weiteren Ausführungsform ist ein Kopf des Sicherungselements in einer Aufnahme oder einem Innenkanal des zweiten Endes aufnehmbar oder anordenbar. Alternativ oder zusätzlich ist das Sicherungselement geschützt innerhalb des ersten Endes, des Aufnahmeelements und des zweiten Endes anordenbar. Vorteilhaft kann damit eine hygienische Konstruktion des Ausgleichsgelenks weiter unterstützt werden.

In einer Ausführungsvariante weist das Ausgleichsgelenk ferner ein, vorzugsweise elastisches und/oder dämpfendes, Pufferelement auf, das zwischen dem Sicherungselement und dem Aufnahmeelement angeordnet ist (z. B. anliegend an diesen). Vorteilhaft kann das Pufferelement das durch den Winkelversatz und/oder den Radialversatz bewirkte Axialspiel zwischen dem ersten Ende und dem Sicherungselement einerseits und dem Aufnahmeelement und dem zweiten Ende andererseits ausgleichen. Zusätzlich kann das Pufferelement bei Linearbewegung vorzugsweise dämpfend wirken.

In einer weiteren Ausführungsvariante ist das Pufferelement an einer dem ersten Ende abgewandten Seite des Aufnahmeelements anordenbar. Alternativ oder zusätzlich kann das Pufferelement an einem Kopf, vorzugsweise Schraubenkopf, des Sicherungselements angeordnet sein (z. B. in einer Ringnut am Kopf). Alternativ oder zusätzlich ist das Pufferelement beispielsweise ringförmig. Alternativ oder zusätzlich kann das Pufferelement innerhalb des zweiten Endes anordenbar sein. Vorteilhaft kann damit eine hygienische Konstruktion des Ausgleichsgelenks weiter unterstützt werden.

In einem Ausführungsbeispiel weist das Ausgleichsgelenk ferner ein weiteres Sicherungselement auf, mit dem das Aufnahmeelement am zweiten Ende befestigbar ist.

In einem weiteren Ausführungsbeispiel ist das weitere Sicherungselement ringförmig, als eine Mutter, vorzugsweise Überwurfmutter, ausgeführt, auf das Aufnahmeelement aufgeschraubt und/oder an einem Absatz des zweiten Endes (z. B. direkt) abstützbar. Vorteilhaft kann damit einerseits eine sichere Befestigung des Aufnahmeelements an dem zweiten Ende sichergestellt und andererseits eine hygienische Konstruktion unterstützt werden.

In einem weiteren Ausführungsbeispiel weist das weitere Sicherungselement einen Leckagekanal auf, der in Fluidverbindung mit einem Innenkanal des zweiten Endes bringbar ist. Vorteilhaft kann bei Austritt eines Fluids, zum Beispiel Schmiermittels, aus dem Innenkanal durch den Leckagekanal auf eine Funktion oder Fehlfunktion des zweiten Bauteils oder eines mit dem zweiten Bauteil verbunden Bauteils geschlossen werden.

In einem weiteren Ausführungsbeispiel weist das Ausgleichsgelenk ferner ein weiteres Dichtelement (zum Beispiel Dichtring) auf, das (z. B. aseptisch) abdichtend zwischen dem Aufnahmeelement und dem weiteren Sicherungselement angeordnet ist (z. B. anliegend an diesen), vorzugsweise aufgenommen in oder an einem bevorzugt (z. B. im Einbauzustand) von außen zugängigen (z. B. ringförmigen) Absatz des Aufnahmeelements. Alternativ oder zusätzlich kann die Vorrichtung ferner ein (weiteres) anderes Dichtelement (z. B. Dichtring) aufweisen, das (z. B. aseptisch) abdichtend zwischen dem zweiten Ende und dem weiteren Sicherungselement anordenbar ist (z. B. anliegend an diesen), vorzugsweise aufgenommen in oder an einem bevorzugt (z. B. im Einbauzustand) von außen zugängigen (z. B. ringförmigen) Absatz des Sicherungselements. Vorteilhaft können die Dichtelemente die hygienische Konstruktion weiter unterstützen, insbesondere durch das Vermeiden von engen Spalten durch die von außen zugängigen Absätze zum Aufnehmen der Dichtelemente.

Beispielsweise kann das Dichtelement, das weitere Dichtelement und/oder das andere Dichtelement elastisch verformbar und/oder als O-Ring ausgeführt sein.

In einer Ausführungsform ist ein von dem Dichtelement abzudichtender Spalt größer als ein von dem weiteren Dichtelement abzudichtender Spalt und/oder ein von dem anderen Dichtelement abzudichtender Spalt. Alternativ oder zusätzlich kann ein Querschnitt des Dichtelements größer sein als ein Querschnitt des weiteren Dichtelements und/oder ein Querschnitt des anderen Dichtelements. Vorteilhaft kann damit konstruktiv gewährleistet werden, dass das Dichtelement auch bei einem Radialversatz und/oder einem Winkelversatz sicher abdichtet.

In einer weiteren Ausführungsform ist bzw. sind das Dichtelement, das weitere Dichtelement und/oder das andere Dichtelement von außen sichtbar und/oder zugängig. Vorteilhaft kann damit verhindert werden, dass bis hin zu den Dichtelementen enge Spalten bestehen, die sich nur ungenügend reinigen lassen.

In einer weiteren Ausführungsform ist das Ausgleichsgelenk zum Übertragen einer Axialbewegung zwischen dem ersten Ende und dem zweiten Ende ausgebildet. Vorteilhaft kann damit bspw. das erste Bauteil mit dem ersten Ende linear/axial mittels eines Antriebs bewegt werden und damit über das Ausgleichsgelenk ebenfalls das zweite Bauteil mit dem zweiten Ende linear/axial bewegt werden. Auf diese Weise kann bspw. ein Verschließerkopf oder -stempel zum Aufdrücken eines Verschlusses (z. B. Kronkorken) oder Eindrücken eines Verschlusses (z. B. Korken) angetrieben werden.

Alternativ oder zusätzlich kann das Ausgleichsgelenk zum Entkoppeln einer Drehbewegung von einem von dem ersten Ende und dem zweiten Ende zum anderen von dem ersten Ende und dem zweiten Ende ausgebildet sein. Vorteilhaft kann damit bspw. das zweite Bauteil um dessen Längsachse/Mittelachse gedreht werden, ohne dass sich das erste Bauteil mitdreht. Damit kann bspw. ein Linearantrieb des zweiten Bauteils mittels des ersten Bauteils ermöglicht werden, wobei das zweite Bauteil zusätzlich separat von einem Antrieb drehbar ist. Vorteilhaft kann damit bspw. mittels eines Verschließerstempels oder -kopfs, der mit dem zweiten Bauteil verbunden ist, ein Behälterverschluss aufgeschraubt oder angerollt werden.

Ein weiterer Aspekt der vorliegenden Offenbarung betrifft eine Verwendung des Ausgleichsgelenks in einer Behälterbehandlungsvorrichtung, vorzugsweise Verschließvorrichtung zum Verschließen von Behältern.

Ein weiterer Aspekt der vorliegenden Offenbarung betrifft eine Vorrichtung zum Versatzausgleich. Die Vorrichtung weist ein erstes Bauteil mit einem ersten Ende, ein zweites Bauteil mit einem zweiten Ende und ein Ausgleichsgelenk wie hierin offenbart auf. Das Ausgleichsgelenk verbindet das erste Ende und das zweite Ende zum Ausgleichen eines Radialversatzes und/oder eines Winkelversatzes zwischen dem ersten Ende und dem zweiten Ende miteinander. Vorteilhaft können mit der Vorrichtung die gleichen Vorteile erzielt werden, die bereits unter Bezugnahme auf das Ausgleichsgelenk beschrieben wurden.

Vorzugsweise ist das erste Bauteil eine axial bewegbare Schubstange.

Bevorzugt ist das zweite Bauteil eine axial bewegbare Schubstange oder eine axial bewegbare (Dreh-) Welle.

Ein weiterer Aspekt der vorliegenden Offenbarung betrifft eine Behälterbehandlungsvorrichtung, vorzugsweise Verschließvorrichtung zum Verschließen von Behältern, aufweisend eine Vorrichtung zum Versatzausgleich wie hierin offenbart. Die Behälterbehandlungsvorrichtung weist einen (z. B. Linear-) Antrieb auf, der das erste Bauteil der Vorrichtung linear bewegbar antreibt und das zweite Bauteil der Vorrichtung über das Ausgleichsgelenk linear bewegbar antreibt. Vorteilhaft können mit der Behälterbehandlungsvorrichtung die gleichen Vorteile erzielt werden, die bereits unter Bezugnahme auf das Ausgleichsgelenk beschrieben wurden.

Optional weist die Behälterbehandlungsvorrichtung einen Verschließerstempel oder Verschließerkopf zum Applizieren eines Behälterverschlusses auf einen Behälter auf, wobei der Verschließerstempel oder Verschließerkopf vorzugsweise mit dem zweiten Bauteil verbunden ist (z. B. integraleinstückig oder unter Zwischenschaltung mindestens eines Verbindungselements).

Optional weist die Behälterbehandlungsvorrichtung einen weiteren (z. B. Dreh-) Antrieb auf, der zum Drehen des zweiten Bauteils trieblich mit dem zweiten Bauteil verbunden ist.

Es ist möglich, dass die Behälterbehandlungsvorrichtung in einer Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, umfasst ist.

Beispielsweise können die Behälter als Flaschen, Dosen, Kanister, Kartons, Flakons usw. ausgeführt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine Seitenansicht einer Vorrichtung zum Versatzausgleich gemäß einem Ausführungsbeispiel der vorliegenden Offenbarung;
- Figur 2: eine perspektivische Ansicht einer Vorrichtung zum Versatzausgleich gemäß einem Ausführungsbeispiel der vorliegenden Offenbarung; und
- Figur 3: eine Schnittansicht einer Vorrichtung zum Versatzausgleich gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

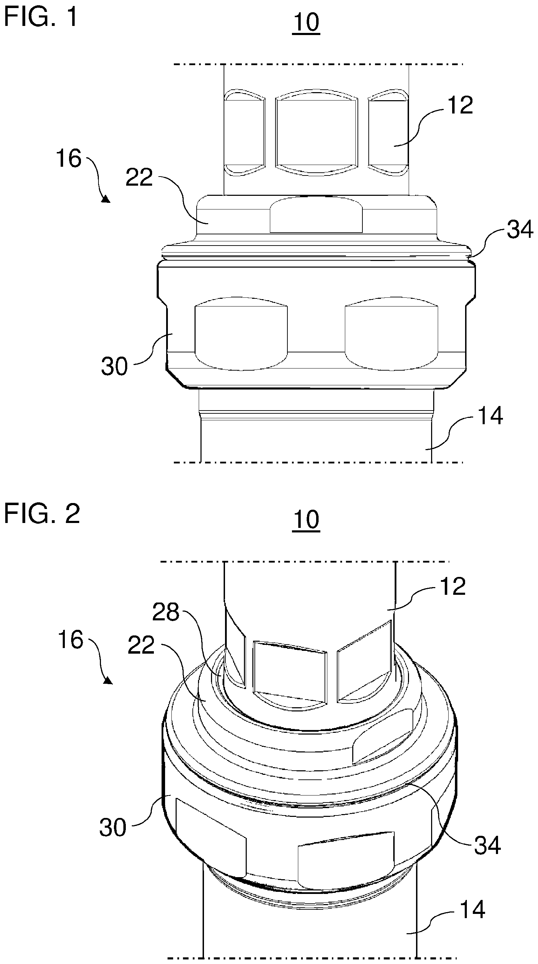

Die Figuren 1 bis 3 zeigen eine Vorrichtung 10 zum Versatzausgleich. Die Vorrichtung 10 ist bevorzugt in einer Behälterbehandlungsvorrichtung zum Behandeln von Behältern umfasst. Besonders bevorzugt ist die Vorrichtung 10 in einer Verschließvorrichtung zum Verschließen von Behältern umfasst, z. B. zum Verbinden eines Antriebs mit einem bspw. linear bewegbaren (und optional drehbaren) Verschließerstempel oder Verschließerkopf.

Die Vorrichtung 10 weist ein erstes Bauteil 12, ein zweites Bauteil 14 und ein Ausgleichsgelenk 16 auf.

Das erste Bauteil 12 weist ein erstes Ende 18 auf. Das erste Bauteil 12 kann ein sich länglich erstreckendes Bauteil sein, zum Beispiel in Rohrform, Stangenform oder Balkenform. Das erste Bauteil 12 kann beispielsweise als eine Schubstange ausgeführt sein. Bevorzugt ist das erste Bauteil 12 linear von einem Antrieb, zum Beispiel einer Hubeinrichtung, bewegbar. Das erste Bauteil 12 kann beispielsweise mit einem Ausgabeelement des Antriebs verbunden sein oder selbst das Ausgabeelement des Antriebs sein. Beispielsweise kann das erste Bauteil 12 mit einem dem ersten Ende 18 entgegengesetzten Ende mit dem Antrieb verbunden sein.

Das zweite Bauteil 14 weist ein zweites Ende 20 auf. Das zweite Bauteil 14 kann ein sich länglich erstreckendes Bauteil sein, zum Beispiel in Rohrform, Stangenform oder Balkenform. Das zweite Bauteil 14 kann beispielsweise als eine Schubstange oder eine axial bewegbare Welle ausgeführt sein. Bevorzugt ist das zweite Bauteil 14 über das erste Bauteil 12 und das Ausgleichsgelenk 16 linear von einem Antrieb, zum Beispiel einer Hubeinrichtung, bewegbar.

Bevorzugt kann das zweite Bauteil 14 mit einem Verschließerstempel oder einem Verschließerkopf einer Verschließvorrichtung zum Applizieren (z. B. Eindrücken, Aufdrücken, Andrücken oder Aufschrauben) eines Verschlusses auf eine Behälteröffnung eines Behälters verbunden sein. Beispielsweise kann der Verschließerstempel oder Verschließerkopf an einem dem zweiten Ende 20 entgegengesetzten Ende des zweiten Bauteils 14 angeordnet sein. Bevorzugt kann der Verschließerstempel oder jegliches andere Bauteil über eine zusätzliche (z. B. doppelte) Führung (nicht in den Figuren dargestellt) eine sehr genaue Linearbewegung machen, ohne sich beispielsweise zu verkannten oder zu verspannen.

Es ist möglich, dass das zweite Bauteil 14 trieblich mit einem weiteren Antrieb (nicht in den Figuren dargestellt) zum Drehen des zweiten Bauteils 14 um eine Längsachse des zweiten Bauteils 14 verbunden ist, z. B. zum Drehen eines mit dem zweiten Bauteil 14 verbundenen Verschließerkopfs oder Verschleißerstempels zum Aufschrauben oder Anrollen eines Behälterverschlusses auf einen Behälter.

Das Ausgleichsgelenk 16 verbindet das erste Ende 18 und das zweite Ende 20 zum Ausgleichen eines Radialversatzes und/oder eines Winkelversatzes (Winkelfehlers) zwischen dem ersten Ende 18 und dem zweiten Ende 20 miteinander. Bezüglich des Ausgleichens des Radialversatzes kann das Ausgleichsgelenk 16 einen Abstand zwischen parallelen Längsachsen des ersten Bauteils 12 und des zweiten Bauteils 14 ausgleichen, wenn bspw. die beiden Längsachsen fertigungs- oder montagebedingt nicht koaxial sind. Bezüglich des Ausgleichens des Winkelversatzes kann das Ausgleichsgelenk 16 eine winklige bzw. geneigte Relativanordnung von Längsachsen des ersten Bauteils 12 und des zweiten Bauteils 14 ausgleichen, wenn bspw. die beiden Längsachsen fertigungs- oder montagebedingt nicht koaxial sind.

Bevorzugt kann das Ausgleichsgelenk 16 eine Axialbewegung zwischen dem ersten Ende 18 und dem zweiten Ende 20 übertragen. Eine Axialbewegung des ersten Endes 18 kann somit eine Axialbewegung des Ausgleichsgelenks 16 und damit des zweiten Endes 20 bewirken und umgekehrt.

Bevorzugt kann das Ausgleichsgelenk 16 eine Drehbewegung des zweiten Endes 20 von dem ersten Ende 18 entkoppeln und umgekehrt. Bspw. kann das zweite Bauteil 14 mit dem zweiten Ende 20 von einem separaten Antrieb um eine Längsachse des zweiten Bauteils 14 gedreht werden, ohne dass sich das erste Ende 18 aufgrund der Drehentkoppelung mittels des Ausgleichsgelenks 16 mitdreht.

Das Ausgleichsgelenk 16 weist ein Aufnahmeelement 22, ein Gleitelement 24, ein Sicherungselement 26 und ein Dichtelement 28 auf. Optional kann das Ausgleichsgelenk 16 beispielsweise noch ein (weiteres) Sicherungselement 30, ein Pufferelement 32, ein (weiteres) Dichtelement 34 und ein (anderes) Dichtelement 36 aufweisen.

Das Aufnahmeelement 22 ist an dem zweiten Ende 20 befestigt. Bevorzugt ist das Aufnahmeelement 22 mittels des Sicherungselement 30 an dem zweiten Ende 20 befestigt. Alternativ ist es beispielsweise auch möglich, dass das Aufnahmeelement 22 direkt an dem zweiten Ende 20 befestigt ist.

Das erste Ende 18 ist in dem Aufnahmeelement 22 aufgenommen. Das Aufnahmeelement 22 kann das erste Ende 18 ringförmig umgeben. Beispielsweise kann das Aufnahmeelement 22 eine Aufnahmekammer 38 aufweisen, in der das erste Ende 18 aufgenommen ist. Die Aufnahmekammer 38 kann einen Innendurchmesser aufweisen, der größer als ein Außendurchmesser des ersten Endes 18 ist. Eine Innenumfangswand der Aufnahmekammer 38 kann jegliche Form aufweisen, z. B. zylindermantelförmig oder mehreck-prismaförmig.

Das Aufnahmeelement 22 kann einen Absatz aufweisen, an denen das Aufnahmeelement 22 an dem zweiten Bauteil 14 abgestützt ist. Beispielsweise kann das Aufnahmeelement 22 über den Absatz auf das zweite Bauteil 14 aufgesteckt oder in das zweite Bauteil 14 eingesteckt sein.

Das Gleitelement 24 kann zwischen dem ersten Ende 18 und dem Aufnahmeelement 22 angeordnet sein. Bevorzugt ist das Gleitelement 24 in der Aufnahmekammer 38 angeordnet sein.

Das Gleitelement 24 verbindet das erste Ende 18 und das Aufnahmeelement 22 gleitend miteinander. Besonders bevorzugt kann das Gleitelement sowohl in Gleitkontakt mit dem ersten Ende 18 als auch in Gleitkontakt mit dem Aufnahmeelement 22 sein.

Im Einzelnen kann das Gleitelement 24 in Gleitkontakt mit einer Stirnfläche 40 des ersten Endes 18 sein. Bevorzugt ist die Stirnfläche 40 plan bzw. eben. Das Gleitelement 24 kann eine (erste) Fläche 42 aufweisen, die in Gleitkontakt mit der Stirnfläche 40 ist. Bevorzugt ist die Fläche 42 ebenfalls plan bzw. eben. Es ist allerdings auch möglich, dass die Stirnfläche 40 und/oder die Fläche 42 beispielsweise konvex oder konkav gewölbt ist.

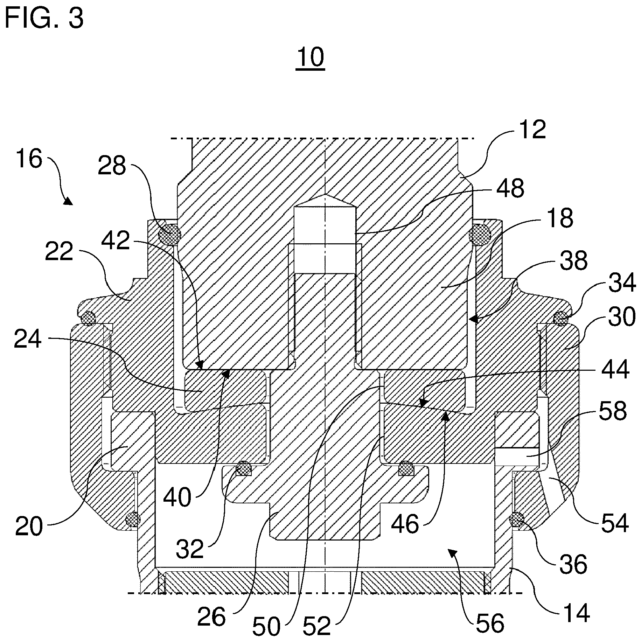

Andererseits kann das Gleitelement 24 in Gleitkontakt mit einer Fläche 44 des Aufnahmeelements 22 sein. Die Fläche 44 ist bevorzugt eine Bodenfläche eines Bodenwandabschnitts des Aufnahmeelements 22. Die Fläche 44 kann die Aufnahmekammer 38 beispielsweise bodenseitig begrenzen. Bevorzugt ist die Fläche 44 ballig bzw. gewölbt, zum Beispiel konvex gewölbt - wie in Figur 3 dargestellt ist - oder konkav gewölbt. Das Gleitelement 24 kann eine (zweite) Fläche 46 aufweisen, die in Gleitkontakt mit der Fläche 44 ist. Bevorzugt ist die Fläche 46 ebenfalls gewölbt, zum Beispiel konkav gewölbt - wie in Figur 3 dargestellt ist - oder konvex gewölbt. Es ist allerdings auch möglich, dass die Fläche 44 und/oder die Fläche 46 beispielsweise plan bzw. eben ist.

Bevorzugt ist das Gleitelement 24 als eine Gleitscheibe bzw. plattenförmig ausgeführt. Die Gleitscheibe hat bevorzugt einen kreisrunden Außenumfang. Beispielsweise können die Flächen 42 und 46 entgegengesetzte Stirnflächen der Gleitscheibe sein. Das Gleitelement 24 kann aus jeglichem Material mit Gleiteigenschaften hergestellt sein, z. B. aus Messing, aus einer Messinglegierung, aus Kupfer oder aus einer Kupferlegierung.

Das Sicherungselement 26 ist an dem ersten Ende 18 befestigt. Bevorzugt kann das Sicherungselement 26 in einem Loch 48 des ersten Endes 18 befestigt, vorzugsweise eingeschraubt, sein. Beispielsweise ist das Loch 48 ein Sackloch. Beispielsweise kann das Loch 48 in die Stirnfläche 40 münden bzw. sich in der Stirnfläche 40 öffnen. Vorzugsweise kann das Loch 48 ein Innengewinde aufweisen. Das Sicherungselement 26 kann ein Außengewinde aufweisen, das zum Befestigen des Sicherungselement 26 am ersten Ende 18 in das Innengewinde des Lochs 48 eingeschraubt ist.

Das Sicherungselement 26 sichert das erste Ende 18 axial bzw. bezüglich einer Längsachse des ersten Bauteils 12 an dem Aufnahmeelement 22, zum Beispiel an einer Unterseite oder Bodenseite des Aufnahmeelements 22. Bevorzugt ist das Sicherungselement 26 als eine Sicherungsschraube ausgeführt.

Im Einzelnen können das Aufnahmeelement 22 und das Gleitelement 24jeweils ein Durchgangsloch 50, 52 aufweisen. Die Durchgangslöcher 50, 52 können miteinander und mit dem Loch 48 ausgerichtet sein. Das Sicherungselement 26 kann sich durch die Durchgangslöcher 50, 52 hindurch in das Loch 48 hinein erstrecken.

Bevorzugt erstreckt sich das Sicherungselement 26 mit Spiel durch die Durchgangslöcher 50, 52. Eine Mantelfläche des Sicherungselement 26, die den Innenumfangsflächen der Durchgangslöcher 50, 52 gegenüberliegt, kann beabstandet zu den Innenumfangsflächen der Durchgangslöcher 50, 52 sein.

Bevorzugt ist das Durchgangsloch 50 ein zentrales Durchgangsloch des Aufnahmeelements 22. Beispielsweise erstreckt sich das Durchgangsloch 50 entlang einer Mittellängsachse des Aufnahmeelements 22. Vorzugsweise erstreckt sich das Durchgangsloch 50 durch einen Bodenwandabschnitt des Aufnahmeelements 22. Das Durchgangsloch 50 kann in die Fläche 44 münden bzw. sich in der Fläche 44 öffnen.

Bevorzugt ist das Durchgangsloch 52 ein zentrales Durchgangsloch des Gleitelements 24. Beispielsweise erstreckt sich das Durchgangsloch 52 entlang einer Mittellängsachse des Gleitelement 24. Vorzugsweise erstreckt sich das Durchgangsloch 52 zwischen der Fläche 42 und der Fläche 46.

Es ist möglich, dass beispielsweise ein Kopf des Sicherungselements 26 in einer Aufnahme (z. B. Hohlraum) oder Innenkanal 56 des zweiten Endes 20 aufgenommen oder angeordnet ist. Vorzugsweise kann das Sicherungselement 26 geschützt innerhalb des ersten Endes 18, des Aufnahmeelements 22, des Gleitelements 24 und des zweiten Endes 20 angeordnet sein.

Das Dichtelement 28 dichtet zwischen dem Aufnahmeelement 22 und dem ersten Ende 18 ab. Bevorzugt ist das Dichtelement 28 in einem Mündungsbereich des Aufnahmeelements 22, vorzugsweise der Aufnahmekammer 38, angeordnet. Das Dichtelement 28 kann beispielsweise in einer Umfangsnut der Aufnahmekammer 38 angeordnet sein. Das Dichtelement 28 kann an einer Außenumfangsfläche des ersten Endes 18 anliegen. Das Dichtelement 28 kann an einer Innenumfangsfläche der Aufnahmekammer 38 anliegen.

Bevorzugt ist das Dichtelement 28 ringförmig. Das Dichtelement 28 kann beispielsweise als ein O-Ring ausgeführt sein. Es ist allerdings auch möglich, dass das Dichtelement 28 auf andere Weise ausgeführt ist, zum Beispiel als jegliche Art von Wellendichtring.

Bevorzugt liegen die Außenumfangsfläche des ersten Endes 18 und die Innenumfangsfläche der Aufnahmekammer 38 nicht aneinander an. Stattdessen können die Außenumfangsfläche des ersten Endes 18 und die Innenumfangsfläche der Aufnahmekammer 38 über das Dichtelement 28 verbunden sein. Bevorzugt ist das Dichtelement 28 elastisch. Das Dichtelement 28 kann eine Abdichtung zwischen dem ersten Ende 18 und dem Aufnahmeelement 22 ermöglichen, auch wenn ein Radialversatz und/oder ein Winkelversatz (Winkelfehler) zwischen den Längsachsen des ersten Bauteils 12 und des Aufnahmeelements 22 besteht. Das Dichtelement 28 kann damit eine Relativbewegung zwischen dem ersten Ende 18 und dem Aufnahmeelement 22 ermöglichen, ohne seine Dichtwirkung zu verlieren.

Das bevorzugt ringförmige Sicherungselement 30 kann das Aufnahmeelement 22 am zweiten Ende 20 befestigen. Beispielsweise kann das Sicherungselement 30 auf ein Außengewinde des Aufnahmeelements 22 aufgeschraubt sein. Das Sicherungselement 30 kann sich bevorzugt an einem Absatz des zweiten Endes 20 direkt abstützen. Das Sicherungselement 30 ist bevorzugt als eine Mutter, besonders bevorzugt als eine Überwurfmutter, ausgeführt.

Es ist möglich, dass das Sicherungselement 30 einen Leckagekanal 54 aufweist. Der Leckagekanal 54 kann eine Fluidverbindung zwischen einer Umgebung des Ausgleichsgelenks 16 und einem Innenkanal 56 des zweiten Endes 20 herstellen. Der Leckagekanal 54 kann sich durch eine Umfangswand des Sicherungselement 30 erstrecken. Ein (z. B. Radial-) Kanal 58 in einer Umfangswand des zweiten Endes 20 kann den Innenkanal 56 und den Leckagekanal 54 miteinander verbinden.

Das Pufferelement 32 kann zwischen dem Sicherungselement 26 und dem Aufnahmeelement 22 angeordnet sein. Das Pufferelement 32 kann bevorzugt elastisch und/oder dämpfend sein bzw. wirken.

Im Einzelnen kann das Pufferelement 32 an einer dem ersten Ende 18 abgewandten Seite des Aufnahmeelements 22, zum Beispiel einer Unterseite des Aufnahmeelements 22 angeordnet sein. Das Pufferelement 32 ist bevorzugt an einem Kopf, vorzugsweise Schraubenkopf, des Sicherungselements 26 angeordnet. Besonders bevorzugt ist das Pufferelement 32 an einer Unterseite des Kopfes des Sicherungselements 26 angeordnet. Beispielsweise kann das Pufferelement 32 in einer Umfangsnut des Sicherungselements 26 angeordnet sein. Vorzugsweise ist das Pufferelement 32 ringförmig.

Eine primäre Aufgabe des Pufferelements 32 kann darin bestehen, das Sicherungselement 26 an dem Aufnahmeelement 22 abzustützen. Dies verbindet das Pufferelement 32 bevorzugt mit einer Dämpfungswirkung. Diese Dämpfungswirkung kann beispielsweise bei einem Hub des ersten Bauteils 12 erfolgen, bei dem das zweite Bauteil 14 verbunden über das Sicherungselement 26, das Pufferelement 32, das Aufnahmeelement 22 usw. mitgezogen wird. Dies kann beispielsweise nach Abschluss eines Behälterverschlussvorgangs erfolgen, wenn der Verschließerstempel oder -kopf von dem bereits applizierten Behälterverschluss entfernt, zum Beispiel nach oben gezogen, wird.

Es ist möglich, dass das Pufferelement 32 zumindest teilweise zwischen dem Aufnahmeelement 22 und dem Sicherungselement 26 abdichtet, zum Beispiel zum Abdichten der Durchgangslöcher 50, 52 und der Aufnahmekammer 38 von der Seite des zweiten Bauteils 14 her.

Das Dichtelement 34 kann abdichtend zwischen dem Aufnahmeelement 22 und dem Sicherungselement 30 angeordnet sein. Beispielsweise kann das Dichtelement 34 an einer Stirnfläche des Sicherungselements 30 angeordnet sein. Das Dichtelement 34 kann bevorzugt in einem Absatz oder einer Umfangsnut des Aufnahmeelements 22 angeordnet sein.

Das Dichtelement 36 kann abdichtend zwischen dem zweiten Ende 20 und dem Sicherungselement 30 angeordnet sein. Beispielsweise kann das Dichtelement 36 außen anliegend an dem zweiten Ende 20 und innen anliegend an dem Sicherungselement 30 angeordnet sein. Bevorzugt ist das Dichtelement 36 in einer Umfangsnut oder einem Absatz des Sicherungselements 30 angeordnet.

Bevorzugt ist das Dichtelement 34 und/oder 36 ringförmig. Das Dichtelement 34 und/oder 36 kann beispielsweise als ein O-Ring ausgeführt sein. Es ist allerdings auch möglich, dass das Dichtelement 34 und/oder 36 auf jegliche andere Weise ausgeführt ist.

Es ist möglich, dass ein von den Dichtelement 28 abzudichtender Spalt größer ist als ein von dem Dichtelement 34 und/oder 36 abzudichtender Spalt. Hier kann beispielsweise ein Querschnitt des Dichtelements 28 größer sein als ein Querschnitt des Dichtelements 34 und des Dichtelements 36.

Besonders bevorzugt ist das Dichtelement 28, das Dichtelement 34 (sofern vorhanden) und/oder das Dichtelement 36 (sofern vorhanden) von außen sichtbar und/oder zugängig. Dies kann bspw. durch einen Spalt bzw. Abstand zwischen den abdichtend verbundenen Teilen gelingen. Es ist beispielsweise möglich, dass im Einbauzustand das Dichtelement 28 in oder an einem von außen zugängigen ringförmigen Absatz des Aufnahmeelements 22 im Mündungsbereich des Aufnahmeelements 22 angeordnet bzw. aufgenommen ist. Das Dichtelement 34 kann im Einbauzustand in oder an einem bevorzugt von außen zugängigen Absatz des Aufnahmeelements 22 angeordnet bzw. aufgenommen sein. Das Dichtelement 36 kann im Einbauzustand in oder an einem bevorzugt von außen zugängigen Absatz des Sicherungselements 30 aufgenommen sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Aufnahmeelements, des Gleitelements, des Sicherungselements und/oder des Dichtelements des unabhängigen Anspruchs 1 offenbart.

### Bezugszeichenliste

- 10: Vorrichtung
- 12: erstes Bauteil
- 14: zweites Bauteil
- 16: Ausgleichsgelenk
- 18: erstes Ende
- 20: zweites Ende
- 22: Aufnahmeelement
- 24: Gleitelement
- 26: Sicherungselement
- 28: Dichtelement
- 30: Sicherungselement
- 32: Pufferelement
- 34: Dichtelement
- 36: Dichtelement
- 38: Aufnahmekammer
- 40: Stirnfläche
- 42: (erste) Fläche
- 44: Fläche
- 46: (zweite) Fläche
- 48: Loch
- 50: Durchgangsloch
- 52: Durchgangsloch
- 54: Leckagekanal
- 56: Innenkanal
- 58: Kanal

## Patentansprüche

1. Ausgleichsgelenk (16) zum Ausgleichen eines Radialversatzes und/oder eines Winkelversatzes zwischen einem ersten Ende (18) eines ersten Bauteils (12) und einem zweiten Ende (20) eines zweiten Bauteils (14), vorzugsweise für eine Verschließvorrichtung zum Verschließen von Behältern, wobei das Ausgleichsgelenk (16) aufweist:
ein Aufnahmeelement (22), in dem das erste Ende (18) aufnehmbar ist und das an dem zweiten Ende (20) befestigbar ist;
ein Gleitelement (24), mit dem das erste Ende (18) und das Aufnahmeelement (22) gleitend miteinander verbindbar sind;
ein Sicherungselement (26), das an dem ersten Ende (18) befestigbar ist und mit dem das erste Ende (18) axial an dem Aufnahmeelement (22) sicherbar ist; und
ein Dichtelement (28), das zum Abdichten zwischen dem Aufnahmeelement (22) und dem ersten Ende (18) anordenbar ist, vorzugsweise aufgenommen in oder an einem bevorzugt von außen zugängigen Absatz des Aufnahmeelements (22).

2. Ausgleichsgelenk (16) nach Anspruch 1, wobei:
das Gleitelement (24) sowohl mit dem ersten Ende (18) als auch mit dem Aufnahmeelement (22) in Gleitkontakt bringbar ist; und/oder
das Gleitelement (24) als eine Gleitscheibe ausgeführt ist.

3. Ausgleichsgelenk (16) nach Anspruch 1 oder Anspruch 2, wobei das Gleitelement (24) aufweist:
eine erste plane Fläche (42), die in Gleitkontakt mit einem von dem ersten Ende (18) und dem Aufnahmeelement (22) bringbar ist und eine zweite, vorzugsweise konkav, gewölbte Fläche (46), die entgegengesetzt zu der ersten planen Fläche (42) ausgerichtet ist und die in Gleitkontakt mit dem anderen von dem ersten Ende (18) und dem Aufnahmeelement (22) bringbar ist; und/oder
das Gleitelement (22) in Gleitkontakt mit einer planen Stirnfläche des ersten Endes (18) bringbar ist; und/oder
das Aufnahmeelement (22) eine, vorzugsweise konvex, gewölbte Fläche (44), vorzugsweise Bodenfläche, in Gleitkontakt mit dem Gleitelement (24) aufweist.

4. Ausgleichsgelenk (16) nach einem der vorherigen Ansprüche, wobei:
das Aufnahmeelement (22) ein Durchgangsloch (50), vorzugsweise an einem Bodenwandabschnitt des Aufnahmeelements (22), aufweist;
das Gleitelement (24) ein Durchgangsloch (52) aufweist; und
das Sicherungselement (26) sich durch das Durchgangsloch (52) des Gleitelements (24) und das Durchgangsloch (50) des Aufnahmeelements (22) erstreckt, vorzugsweise mit Spiel.

5. Ausgleichsgelenk (16) nach einem der vorherigen Ansprüche, wobei:
das Sicherungselement (26) als eine Sicherungsschraube ausgeführt ist; und/oder
ein Kopf des Sicherungselements (26) in einer Aufnahme oder einem Innenkanal des zweiten Endes (20) aufnehmbar oder anordenbar ist; und/oder
das Sicherungselement (26) geschützt innerhalb des ersten Endes (18), des Aufnahmeelements (22) und des zweiten Endes (20) anordenbar ist.

6. Ausgleichsgelenk (16) nach einem der vorherigen Ansprüche, ferner aufweisend:
ein, vorzugsweise elastisches und/oder dämpfendes, Pufferelement (32), das zwischen dem Sicherungselement (26) und dem Aufnahmeelement (22) angeordnet ist.

7. Ausgleichsgelenk (16) nach Anspruch 6, wobei das Pufferelement (32):
an einer dem ersten Ende (18) abgewandten Seite des Aufnahmeelements (22) anordenbar ist; und/oder
an einem Kopf, vorzugsweise Schraubenkopf, des Sicherungselements (26) angeordnet ist; und/oder
ringförmig ist; und/oder
innerhalb des zweiten Endes (20) anordenbar ist.

8. Ausgleichsgelenk (16) nach einem der vorherigen Ansprüche, ferner aufweisend:
ein weiteres Sicherungselement (30), mit dem das Aufnahmeelement (22) am zweiten Ende (20) befestigbar ist.

9. Ausgleichsgelenk (16) nach Anspruch 8, wobei das weitere Sicherungselement (30):
ringförmig ist; und/oder
als eine Mutter, vorzugsweise Überwurfmutter, ausgeführt ist; und/oder auf das Aufnahmeelement (22) aufgeschraubt ist; und/oder an einem Absatz des zweiten Endes (20) abstützbar ist.

10. Ausgleichsgelenk (16) nach Anspruch 8 oder Anspruch 9, wobei:
das weitere Sicherungselement (30) einen Leckagekanal (54) aufweist, der in Fluidverbindung mit einem Innenkanal (56) des zweiten Endes (20) bringbar ist.

11. Ausgleichsgelenk (16) nach einem der vorherigen Ansprüche, ferner aufweisend:
ein weiteres Dichtelement (34), das abdichtend zwischen dem Aufnahmeelement (22) und dem weiteren Sicherungselement (30) angeordnet ist, vorzugsweise aufgenommen in oder an einem bevorzugt von außen zugängigen Absatz des Aufnahmeelements (22); und/oder
ein anderes Dichtelement (36), das abdichtend zwischen dem zweiten Ende (20) und dem weiteren Sicherungselement (30) anordenbar ist, vorzugsweise aufgenommen in oder an einem bevorzugt von außen zugängigen Absatz des Sicherungselements (30).

12. Ausgleichsgelenk (16) nach Anspruch 11, wobei:
ein von dem Dichtelement (28) abzudichtender Spalt größer ist als ein von dem weiteren Dichtelement (34) abzudichtender Spalt und/oder ein von dem anderen Dichtelement (36) abzudichtender Spalt; und/oder
ein Querschnitt des Dichtelements (28) größer ist als ein Querschnitt des weiteren Dichtelements (34) und/oder ein Querschnitt des anderen Dichtelements (36); und/oder
das Dichtelement (28), das weitere Dichtelement (34) und/oder das andere Dichtelement (36) von außen sichtbar und/oder zugängig ist.

13. Ausgleichsgelenk (16) nach einem der vorherigen Ansprüche, wobei:
das Ausgleichsgelenk (16) zum Übertragen einer Axialbewegung zwischen dem ersten Ende (18) und dem zweiten Ende (20) ausgebildet ist; und/oder
das Ausgleichsgelenk (16) zum Entkoppeln einer Drehbewegung von einem von dem ersten Ende (18) und dem zweiten Ende (20) zum anderen von dem ersten Ende (18) und dem zweiten Ende (20) ausgebildet ist.

14. Vorrichtung (10) zum Versatzausgleich, aufweisend:
ein erstes Bauteil (12) mit einem ersten Ende (18);
ein zweites Bauteil (14) mit einem zweiten Ende (20); und
ein Ausgleichsgelenk (16) nach einem der vorherigen Ansprüche, wobei das Ausgleichsgelenk (16) das erste Ende (18) und das zweite Ende (20) zum Ausgleichen eines Radialversatzes und/oder eines Winkelversatzes zwischen dem ersten Ende (18) und dem zweiten Ende (20) miteinander verbindet,
wobei vorzugsweise:
- das erste Bauteil (12) eine axial bewegbare Schubstange ist; und/oder
- das zweite Bauteil (14) eine axial bewegbare Schubstange oder eine axial bewegbare Welle ist.

15. Behälterbehandlungsvorrichtung, vorzugsweise Verschließvorrichtung zum Verschließen von Behältern, aufweisend:
eine Vorrichtung (10) nach Anspruch 14; und
einen Antrieb, der das erste Bauteil (12) der Vorrichtung (10) linear bewegbar antreibt und das zweite Bauteil (14) der Vorrichtung (10) über das Ausgleichsgelenk (16) linear bewegbar antreibt; und optional
einen Verschließerstempel oder Verschließerkopf zum Applizieren eines Behälterverschlusses auf einen Behälter, wobei der Verschließerstempel oder Verschließerkopf mit dem zweiten Bauteil (14) verbunden ist.
